(19) Europäisches Patentamt
European Patent Office
Office européen des brevets

(11) **EP 2 922 408 B1**

(12) **EUROPEAN PATENT SPECIFICATION**

(45) Date of publication and mention of the grant of the patent:
**15.06.2016 Bulletin 2016/24**

(51) Int Cl.:
*A23G 9/24* *(2006.01)*    *A23G 9/48* *(2006.01)*
*A23G 9/32* *(2006.01)*

(21) Application number: **13794881.6**

(22) Date of filing: **19.11.2013**

(86) International application number:
**PCT/EP2013/074187**

(87) International publication number:
**WO 2014/079848 (30.05.2014 Gazette 2014/22)**

(54) **A FROZEN CONFECTION AND A PROCESS FOR THE MANUFACTURE OF A FROZEN CONFECTION**

GEFRORENES KONFEKT UND VERFAHREN ZUR HERSTELLUNG EINES GEFRORENEN KONFEKTS

CONFISERIE GLACÉE ET PROCÉDÉ DE FABRICATION D'UNE CONFISERIE GLACÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.11.2012 EP 12193827**

(43) Date of publication of application:
**30.09.2015 Bulletin 2015/40**

(73) Proprietors:
• **Unilever PLC**
  **London, Greater London EC4Y 0DY (GB)**
  Designated Contracting States:
  **CY GB IE MT**
• **Unilever N.V.**
  **3013 AL Rotterdam (NL)**
  Designated Contracting States:
  **AL AT BE BG CH CZ DE DK EE ES FI FR GR HR HU IS IT LI LT LU LV MC MK NL NO PL PT RO RS SE SI SK SM TR**

(72) Inventors:
• **ALDRED, Deborah, Lynne**
  **Sharnbrook, Bedfordshire MK44 1LQ (GB)**
• **BRAMLEY, Allan, Sidney**
  **Cambridge, Cambridgeshire CB2 0HT (GB)**

(74) Representative: **Warner, Guy Jonathan**
  **Unilver PLC**
  **Unilever Patent Group**
  **Colworth House**
  **Sharnbrook**
  **Bedford, Bedfordshire MK44 1LQ (GB)**

(56) References cited:
  EP-A1- 0 322 469          WO-A1-2013/007493
  WO-A2-2012/156539     CN-U- 202 525 019
  US-A- 3 752 678           US-A- 4 985 263
  US-B1- 6 548 097

• "Peel-a-Pop Ice Pop", GNPD,, July 2008 (2008-07), XP002684430,

**Description**

**Technical Field of the Invention**

The present invention relates to a process for the production of a frozen confection. In particular, it relates to a process for the production of a frozen confection having a peelable coating. It also relates to a peelable frozen confection product.

**Background of the Invention**

Consumers of frozen confections are constantly looking for new experiences. Products have recently been launched that have a frozen confection core with a peelable gel layer (i.e. coating) on the outside. This gel layer can be peeled away from the frozen confection core and eaten separately providing an exciting and different eating experience. The "Peel-a-Pop Ice Pop" is one such product. WO 2012/156539 relates to a frozen confectionery product comprising a core consisting of a frozen confection, wherein the core is coated with a frozen flexible edible gel layer. WO 2013/007493 relates to a product comprising a core of a frozen confection, which is at least partially coated with a gel. CN 202 525 019 relates to a peeling ice cream comprising an ice cream core and an ice cream handle, an edible flexible cladding layer is arranged outside the ice cream core.

The peelable layer in these products is a gel that has been formed using thermosetting gelling agents such as locust bean gum. Because the gel is thermosetting, it requires the liquid mix to be heated to an elevated temperature during processing and production in order to combine the ingredients and to form a pourable, flowable mix that can be placed into moulds. As the heated mix cools, it then sets to form the gel layer of the product.

However, processes such as this have many drawbacks. The need to heat the mixes demands increased energy consumption for heating. It also demands increased energy consumption because the heated mix then has to be cooled back down in order to freeze the products. The use of heated liquids also presents a danger to employees on the production line. Production lines also have to run at a reduced speed because of the time taken in heating and cooling the mixes. Finally, the use of heated liquids increases the risk of microbial contamination. There is therefore a need to make these products using another process, ideally one that does not require the gel mix to be heated.

Chemically setting gelling systems provide an alternative to thermosetting gelling systems and do not require elevated temperatures. However it has been found that simply replacing the thermosetting system used in existing products with a chemically setting gelling system does not provide suitable products. There is therefore a need for a new process that allows the production of frozen confections with a peelable coating that overcomes all of the foregoing difficulties.

**Summary of the Invention**

It has now been found that a specific process allows a chemically setting gelling system to be used for the production of frozen confections with a peelable layer. In a first aspect, the invention therefore provides a process for the manufacture of a frozen confection with a peelable coating comprising the steps of:

a) Providing a mould at a temperature of at most -10°C;
b) Filling the mould with a liquid mix of a first frozen confection;
c) Allowing the first frozen confection to partially freeze;
d) Removing the excess liquid mix from the mould;
e) Filling the mould with a second liquid mix;
f) Removing the second liquid mix;
g) Filling the mould with at least one further frozen confection; and then
h) Freezing to form a frozen confection product

characterised in that

- The liquid mix of the first frozen confection comprises a chemically setting gelling biopolymer; and
- The second liquid mix comprises a source of divalent cations.

In an alternative embodiment, steps e) and f) can be replaced by spraying the required amount of the second liquid mix onto the inner surface of the first frozen confection.

First frozen confection

Preferably the first frozen confection is a water ice or fruit ice.

Preferably the first frozen confection comprises at least 0.1 wt % of a chemically setting gelling biopolymer, more preferably at least 0.25 wt%, more preferably still at least 0.5 wt%, yet more preferably at least 0.7wt%, most preferably at least 0.75wt%.

Preferably the first frozen confection comprises at most 5 wt% of a chemically setting gelling biopolymer, more preferably at most 2 wt%, more preferably still at most 1.5 wt%, yet more preferably at most 1.25wt%, most preferably at most 1wt%.

Preferably the chemically setting gelling biopolymer is selected from the group consisting of alginates, iota-carrageenan, kappa-carrageenan and pectin.

Preferably the chemically setting gelling biopolymer is sodium alginate.

Preferably the first frozen confection comprises at most 0.2 wt% of a source of divalent cations, more preferably at most 0.1 wt%, more preferably still at most 0.01 wt%, yet more preferably at most 0.001 wt%. Most preferably the first frozen confection is free from a source of divalent cations.

Where the chemically setting gelling biopolymer is not pectin, the first frozen confection preferably also comprises at least 0.05 wt % pectin, more preferably at least 0.1 wt%, more preferably still at least 0.2 wt%, yet more preferably at least 0.3wt%.

Where the chemically setting gelling biopolymer is not pectin, the first frozen confection preferably also comprises at most 2 wt% of pectin, more preferably at most 1 wt%, more preferably still at most 0.75 wt%, yet more preferably at most 0.5wt%.

Preferably the first frozen confection comprises at least 10 wt% total solids, more preferably at least 15 wt%, more preferably still at least 20 wt%, yet more preferably at least 25 wt%.

Preferably the first frozen confection comprises at most 60 wt% total solids, more preferably at most 45 wt%, more preferably still at most 40 wt%, yet more preferably at most 35wt%.

Second mix

Preferably the second liquid mix comprises at least 0.25 wt% of a source of divalent cations, more preferably at least 0.5 wt%, more preferably still at least 1 wt%, yet more preferably at least 2 wt%, most preferably at least 3 wt%.

Preferably the second liquid mix comprises at most 10 wt% of a source of divalent cations, more preferably at most 7.5 wt%, more preferably still at most 5 wt%, yet more preferably at most 4.5 wt%, most preferably at most 3.5 wt%.

Preferably the divalent cations are selected from the group consisting of $Ca^{2+}$, $Cu^{2+}$, or $Zn^{2+}$.

Where the chemically setting gelling biopolymer is an alginate the second liquid mix preferably comprises a source of $Ca^{2+}$ ions, more preferably it contains calcium chloride as the source of divalent cations.

Preferably the second liquid mix comprises at least 1 wt% of an acid, more preferably at least 2.5 wt%, more preferably still at least 5 wt%, yet more preferably at least 10 wt%.

Preferably the second liquid mix comprises at most 50 wt% of an acid, more preferably at most 35 wt%, more preferably still at most 25 wt%, yet more preferably at most 15 wt%, most preferably at most 12.5 wt%.

Preferably the acid is citric acid.

Preferably the second liquid mix has a pH of at most 6, more preferably at most 5, more preferably still at most 4, and preferably at least 2, most preferably at least 3.

Timing

Preferably the period between steps b) and d) is at least 10 seconds, more preferably at least 30 seconds, more preferably still at least 45 seconds, yet more preferably at least 55 seconds, most preferably at least 60 seconds.

Preferably the period between steps b) and d) is at most 360 seconds, more preferably at most 240 seconds, more preferably still at most 180 seconds, yet more preferably at most 90 seconds, most preferably at most 75 seconds.

Preferably the period between steps e) and f) is at least 5 seconds, more preferably at least 15 seconds, more preferably still at least 20 seconds, yet more preferably at least 25 seconds, most preferably at least 30 seconds.

Preferably the period between steps e) and f) is at most 180 seconds, more preferably at most 120 seconds, more preferably still at most 90 seconds, yet more preferably at most 60 seconds, most preferably at most 45 seconds.

Temperature

Preferably the temperature of the mould is at most -15°C, more preferably at most -20°C, more preferably still at most -25°C, yet more preferably at most -30°C, most preferably at most -45°C.

Preferably the mould is placed in a cooled brine bath to achieve these temperatures.

Core

Preferably the at least one further frozen confection added in step g) is chosen from the group consisting of water ices, fruit ices, ice creams, frozen yoghurts, and sorbets.
Preferably the at least one further first frozen confection comprises at most 5 wt% of a chemically setting gelling biopolymer, more preferably at most 2 wt%, more preferably still at most 1.5 wt%, yet more preferably at most 1.25wt%, even more preferably at most 1wt%, most preferably none.

Stick

Preferably a stick is inserted into the product between steps g) and h).

Line of weakness

In a preferred embodiment a line of weakness can be created in the peelable coating. This can be achieved by suitable ways known to the person skilled in the art, for example by scoring or cutting the peelable coating of the product.
The process of the first aspect allows for the production of a new product format that has previously not been possible. Therefore in a second aspect the present invention provides a product obtained and/or obtainable by the process of the first aspect.
In a final aspect, the present invention provides a frozen confection having a frozen confection core and a peelable outer coating, characterised in that the outer layer is a gel formed from chemically setting gelling biopolymers.
In the product of the final aspect, the composition of the outer layer is as set out above in respect of the first frozen confection in the process of the first aspect.

**Summary of Figures**

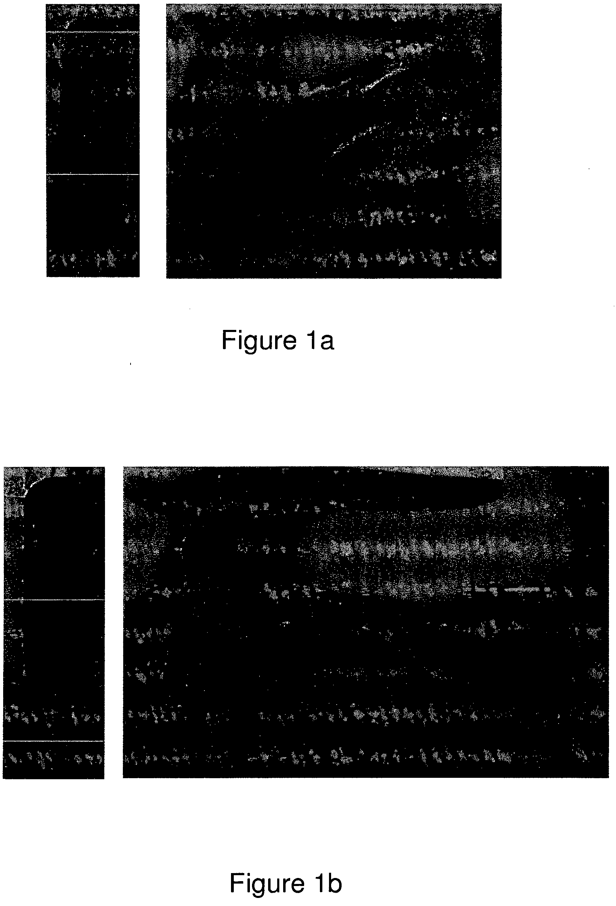

Figure 1 shows products obtained by the process of the first aspect. These products therefore correspond to the products of the second and final aspects of this invention. The products are shown in both a coated and in a partially peeled state.

**Detailed Description of the Invention**

Unless defined otherwise, all technical and scientific terms used herein have the same meaning as commonly understood by one of ordinary skill in the art (e.g. in frozen food manufacture). Definitions and descriptions of various terms and techniques used in frozen confectionery manufacture are found in "Ice Cream", 6th Edition R.T. Marshall, H.D. Goff and R.W. Hartel, Kluwer Academic / Plenum Publishers, New York 2003 and "The Science of Ice Cream", C.J. Clarke, Royal Society of Chemistry, Cambridge, 2004.
Frozen confections are sweet-tasting fabricated foodstuffs intended for consumption in the frozen state (i.e. under conditions wherein the temperature of the foodstuff is less than 0°C, and preferably under conditions wherein the foodstuff comprises a significant amount of ice). Frozen confections include water ices and fruit ices, which comprise water and one or more of sugars, stabilisers, colours and flavours, but little or no fat or protein (e.g. less than 5 wt% of each, preferably less than 2 wt%). Frozen confections also include ice creams, frozen yoghurts, sorbets and the like.
The frozen confection may be aerated or unaerated. The extent of the aeration can be measured in terms of the volume of the aerated product. The extent of aeration is typically defined in terms of "overrun". In the context of the present invention, % overrun is defined in volume terms as:

$$\text{Overrun (\%)} = \frac{(\text{volume of final aerated product} - \text{volume of unaerated mix})}{\text{volume of unaerated mix}} \times 100$$

If the frozen confection is aerated, the overrun is preferably at least 20%, more preferably at least 50%. It is preferable that the overrun does not exceed 200%, more preferably the overrun is less than 130%. Overrun is typically produced by intentionally incorporating gas into the product, such as by mechanical agitation. The gas can be any food-grade gas such as air, nitrogen or carbon dioxide.

Multilayered frozen confections are often made using the fill and suck technique. In this technique a mould is provided into which a liquid mix of a frozen confection is introduced. The mould is cooled to a temperature at which the liquid mix of a frozen confection will freeze when it comes into contact with the inner surface of the mould. Moulds are typically cooled my placing them in a brine bath. The liquid mix of a frozen confection is allowed to remain in the mould for a period of time during which the liquid in contact with the mould freezes. Any unfrozen liquid is then removed by suction. This leaves a shell formed from a frozen layer of product on the mould. This step is repeated with further liquid mixes of frozen confections which themselves freeze in different layers to form the multilayered product. A final core is then added and a stick is usually inserted. The product is then removed from the mould and packaged.

The existing products that have recently been launched and that have a frozen confection core with gel layer on the outside can also be made using the fill and suck technique. The composition of the first frozen confection that is dosed into the mould is modified in order to obtain the gelled outer layer. The existing products use a thermosetting gelling system. In these systems, biopolymers such as gelatine or agar are mixed with an aqueous phase. This aqueous phase is heated in order to achieve an elevated temperature at which the thermosetting gelling biopolymers will dissolve and interact prior to forming the gel matrix. In an alternative thermosetting gelling system, gelling agents may also be a synergistic combination of two or more thermosetting biopolymers that on mixing will form a gel of a higher modulus. Examples include: sodium alginate with pectin; xanthan with locust bean gum; agar with locust bean gum; and carrageenan with locust bean gum. Again, these components must be mixed with an aqueous phase that has been heated.

In order to make the existing products, the mixture with the thermosetting gelling system must first be heated in order to mix the components and to make it processable. It is then poured into the moulds which must cool the mix down from the elevated temperature in order to form the gel. The mix remains in the mould until it has partially frozen and/or gelled and the excess liquid can then be removed by suction. The other parts of the product are then added.

However, this process demands increased energy consumption for heating and cooling. The heated liquids also present a danger to employees on the production line and these lines have to run at reduced speeds because of the time taken in heating and cooling the gels. Finally, the use of heated liquids increases the risk of microbial contamination.

Chemically setting gelling systems provide an alternative to thermosetting gelling systems and do not require elevated temperatures. These use chemically setting gelling biopolymers which derive their gel structure from an interaction between the biopolymer and an appropriate divalent ion. Examples of chemically setting gelling biopolymers include alginates (e.g. sodium alginate), iota-carrageenan, kappa-carrageenan and pectin. Appropriate divalent ions include $Ca^{2+}$, $Cu^{2+}$, or $Zn^{2+}$. Typically, two separate streams, each of which contains one of the components of a chemically setting gelling agent are mixed. For example, the mix may be made in two parts, one containing sodium alginate and the other containing a source of $Ca^{2+}$ ions. When the two mixes are combined, the alginate reacts with the $Ca^{2+}$ to form the gel.

However simply replacing the thermosetting system used in existing products with a chemically setting gelling system does not provide suitable products. The gel can set too quickly such that it does not form the outer layer. In addition, it can be difficult to provide gelling agents in the correct amounts such that the gel layer is strong enough to adhere to the product but malleable enough so that it can be peeled off without breaking. The present invention therefore provides a specific process that allows chemically setting gelling biopolymers to be used in the manufacture of these products

It has now been found that by providing the chemically setting gelling biopolymers in the outer layer but in the absence of an adequate divalent cation source, then chemically setting gelling systems can be used in the fill and suck process and a high quality peelable product is obtained. The divalent cation source is provided in an intermediate fill and suck step which follows the formation of the outer layer of the product. In this intermediate step a liquid mix comprising a relatively high concentration of a divalent cation source is poured into the mould and then quickly removed. Further frozen confections are then added. This intermediate step provides a thin layer of the liquid mix which remains in contact with the outer layer. The divalent ions are therefore able to permeate into the outer layer where they crosslink the polymers and hence form the gel.

The process of the invention therefore comprises the steps of:

a) Providing a mould at a temperature of at most -10°C;
b) Filling the mould with a liquid mix of a first frozen confection;
c) Allowing the first frozen confection to partially freeze;
d) Removing the excess liquid mix from the mould;
e) Filling the mould with a second liquid mix;
f) Removing the second liquid mix;
g) Filling the mould with at least one further frozen confection; and then
h) Freezing to form a frozen confection product

Crucially, the liquid mix of the first frozen confection comprises a chemically setting gelling biopolymer; and it is the second liquid mix which comprises the source of divalent cations.

The first frozen confection typically contains from 0.1 wt % to 5 wt% of the chemically setting gelling biopolymer. The chemically setting gelling biopolymer can be an alginate, or an iota-carrageenan, kappa-carrageenan or pectin. In a preferred embodiment the chemically setting gelling biopolymer is sodium alginate.

In order to avoid the gel forming during production, the first frozen confection preferably contains no more than 0.2 wt% of a source of divalent cations, preferably it is free from divalent cations.

Where the chemically setting gelling biopolymer is not pectin, the first frozen confection preferably also comprises from 0.05 wt % to 2 wt % pectin since this provides an enhanced gel layer.

The total solids of the first frozen confection can play a role in the peelability of the layer and so a preferred embodiment the gel layer comprises from 10 wt% to 60 wt% total solids.

The second liquid mix provides the divalent cations required to cross link the biopolymers of the outer layer. A preferred embodiment comprises from 0.25 wt% to 10 wt% of a source of divalent cations. The divalent cations are preferably one or more of $Ca^{2+}$, $Cu^{2+}$, or $Zn^{2+}$. When an alginate is used, the second liquid mix typically comprises a source of $Ca^{2+}$ ions, preferably calcium chloride.

The second liquid mix may also contain from 1 wt% to 50 wt% of an acid, preferably citric acid. It will typically have a pH of at most 6.

In order to allow a thick enough layer of the first frozen confection to form, the period between steps b) and d) is typically from 10 to 360 seconds.

In order to allow enough divalent cations to be deposited on the inner surface of the outer layer, the period between steps e) and f) may be from 5 to 180 seconds.

The temperature of the mould depends on the time required for freezing the product and the composition of the frozen confections used. However, a range of from -15°C to -80°C would be suitable. The mould can be placed in a cooled brine bath to achieve these temperatures.

In an alternative embodiment, steps e) and f) can be replaced by spraying the required amount of the second liquid mix onto the inner surface of the first frozen confection.

The one or more further frozen confections added in step g) can be any suitable confection, for example water ices, fruit ices, ice creams, frozen yoghurts, or sorbets. A stick may be inserted into the core of the product between steps g) and h).

In order to facilitate the peeling of the coating layer, the at least one further first frozen confection preferably comprises at most 5 wt% of a chemically setting gelling biopolymer, more preferably at most 2 wt%, more preferably still at most 1.5 wt%, yet more preferably at most 1.25wt%, even more preferably at most 1wt%, most preferably none.

In order to further facilitate the peeling of the coating layer, a line of weakness can be created in the peelable coating. This can be achieved by suitable ways known to the person skilled in the art, for example by scoring or cutting the peelable coating of the product.

The process of the first aspect allows for the production of a new product format that has previously not been possible. Surprisingly, it appears that the separate provision of the chemically setting gelling biopolymer and the source of divalent cations not only allows for the production of peelable products using a far safer and efficient process, it also provides a far better gel even when the products are subjected to temperature abuse. Normally products are stored and transported at temperatures below -20°C but sometimes the cold supply chain is not able to provide these consistently low temperatures. When the products of the invention were subjected to temperature fluctuations between -20°C and -10°C it was found that the peelability of the outer gel layer actually improved. This is believed to be because at the higher temperatures more divalent cations were able to interact with the chemically setting gelling biopolymers in the outer layer and therefore the gel became more cross-linked and stronger. The process and products of the invention are therefore not only resistant to temperature abuse in the supply chain, they are actually enhanced by it.

Therefore in a second aspect the present invention provides the product obtained and/or obtainable by the process of the first aspect.

In a final aspect, the present invention provides a frozen confection having a frozen confection core and a peelable outer layer, characterised in that the outer layer is a gel formed from chemically setting gelling biopolymers.

The present invention will now be further described with reference to the following non-limiting examples.

## Examples

For the sake of clarity: In the tables below which describe products with more than one component, the wt% values given are the weight percent *per component,* not weight percent of the final product.

Example 1

A first frozen confection (Outer layer - 1.1), an intermediate liquid mix (Source of divalent cations - 1.2) and a further frozen confection (Water ice - 1.3) were made according to the formulations of table 1.

The outer layer (1.1) was prepared by combining the stabilisers and the' chemically setting gelling biopolymers with the sugars and blending into water at room temperature. The mix was heated to 85°C to hydrate the stabilisers and to pasteurise the mix. The mix was cooled to +5°C ready for use. The source of divalent cations (1.2) was prepared by dissolving the calcium chloride in water at room temperature. Once the calcium chloride had dissolved, the citric acid was added. The mix was also stored at +5°C ready for use. The water ice (1.3) was prepared by combining the stabilisers with the sugars and blending into water at room temperature. The mix was heated to 85°C to hydrate the stabilisers and to pasteurise the mix. The mix was cooled to +5°C ready for use.

**Table 1 - Formulations of example 1**

| Ingredients (wt%) | Outer layer -1.1 | Source of divalent cations - 1.2 | Water ice -1.3 |
|---|---|---|---|
| | **wt**% | **wt**% | **wt**% |
| Sucrose | 9 | - | 17 |
| Dextrose | 10 | - | - |
| Maltodextrin (D.E. 40) | 11.5 | - | 1.6 |
| Alginate | 0.9 | - | - |
| Pectin | 0.4 | - | - |
| Locust Bean Gum | - | - | 0.1 |
| Guar Gum | - | - | 0.1 |
| Calcium Chloride | - | 3.17 | - |
| Citric Acid | - | 10.5 | 0.15 |
| Colour (Beet Red) | 0.05 | - | 0.05 |
| Flavours | 0.05 | - | 0.05 |
| Water | to 100 | to 100 | to 100 |
| *Total Solids* | *30.2* | *12.7* | - |

Products were prepared as follows: The outer layer mix (1.1) was filled into moulds in a brine bath set at -25°C and left for 60 seconds. The remaining mix was sucked out, leaving a shell behind. The mould was then filled with the source of divalent cations (1.2) which was left in the mould and remained in contact with the shell for 30 seconds. The remaining mix was then sucked out. This did not leave behind a visibly apparent layer. In the final step, the shell was filled with the water ice mix (1.3), a stick was inserted and the product was left to harden. Once completely frozen the lolly was de-moulded by plunging into hot water, hardened off in the blast freezer at -35°C, packed into sleeves and then stored.

Two of the examples thus formed are shown in Figures 1 a) and b). It is readily apparent that the resultant products are well formed and that the outer layer had formed a gel that is strong enough to cohere with the product and that retains its structure during storage yet that is easily peeled from the water ice core.

Comparative Example A

Comparative example A was carried out to assess whether placing the divalent ions in the core would provide suitable products.

An outer layer (A.1) and an inner core (A.2, water ice) were made according to the formulations in table 2. Outer layer (A.1) was prepared by combining the stabilisers and the chemically setting gelling biopolymers with the sugars and blending into water at room temperature. The mix was heated to 85°C to hydrate the stabilisers and to pasteurise the mix. The mix was cooled to +5°C ready for use. The water ice (A.2) was prepared by combining and dissolving the calcium chloride in water at room temperature. Once the calcium chloride had dissolved, the citric acid was added. This solution was then cooled to +5°C and set to one side before being combined with the remaining ingredients. These remaining ingredients of A.2 were prepared by combining the stabilisers with the sugars and blending into water at room temperature. The mix was heated to 85°C to hydrate the stabilisers and to pasteurise the mix. The mix was cooled to +5°C and mixed with the calcium chloride and citric acid solution.

**Table 2 - Formulations of comparative example A**

| Ingredients (wt%) | Outer layer - A.1 | Water ice - A.2 |
|---|---|---|
| | wt% | wt% |
| Sucrose | 9 | 17 |
| Dextrose | 10 | - |
| Maltodextrin (D.E. 40) | 11.5 | 1.6 |
| Alginate | 0.9 | - |
| Pectin | 0.4 | - |
| Locust Bean Gum | - | 0.1 |
| Guar Gum | - | 0.1 |
| Calcium Chloride | - | 3.17 |
| Citric Acid | - | 0.15 |
| Colour (Beet Red) | 0.05 | 0.05 |
| Flavours | 0.05 | 0.05 |
| Water | to 100 | to 100 |

Products were prepared as follows: The outer layer mix (A.1) was filled into moulds in a brine bath set at -25°C and left for 60 seconds. The remaining mix was sucked out, leaving a shell behind. The shell was then filled with the water ice mix (A.2), a stick was inserted and the product was left to harden. Once completely frozen the lolly was de-moulded by plunging into hot water, hardened off in the blast freezer at -35°C, packed into sleeves and then stored.

The products of comparative example A produced were found to be extremely variable. In some products the outer layers were very stiff and could not be peeled from the water ice core easily. Those that could be removed did not peel away in a single coil but flaked off in pieces. They were also found to be very hard and chewy. In the other products the outer layer had failed to form a gel, was structurally unstable and was not peelable.

Comparative Example B

Comparative example B was carried out to assess whether placing the divalent ions in the outer layer would provide suitable products.

An outer layer (B.1) and an inner core (B.2, water ice) were made according to the formulations in table 3. Outer layer (B.1) was prepared by combining and dissolving the calcium chloride in water at room temperature. This solution was then cooled to +5°C and set to one side before being combined with the remaining ingredients. These remaining ingredients of B.1 were prepared by combining the stabilisers and the chemically setting gelling biopolymers with the sugars and blending into water at room temperature. The mix was heated to 85°C to hydrate the stabilisers and to pasteurise the mix. The mix was cooled to +5°C and ready to be combined with the calcium chloride solution. The water ice (B.2) was prepared by combining the stabilisers with the sugars and blending into water at room temperature. The mix was heated to 85°C to hydrate the stabilisers and to pasteurise the mix. The mix was cooled to +5°C.

**Table 3 - Formulations of comparative example B**

| Ingredients (wt%) | Outer layer - B.1 | Water ice - B.2 |
|---|---|---|
| | wt% | wt% |
| Sucrose | 9 | 17 |
| Dextrose | 10 | - |
| Maltodextrin (D.E. 40) | 11.5 | 1.6 |

(continued)

| Ingredients (wt%) | Outer layer - B.1 | Water ice - B.2 |
|---|---|---|
| | wt% | wt% |
| Alginate | 0.9 | - |
| Pectin | 0.4 | - |
| Locust Bean Gum | - | 0.1 |
| Guar Gum | - | 0.1 |
| Calcium Chloride | 3.17 | - |
| Citric Acid | - | 0.15 |
| Colour (Beet Red) | 0.05 | 0.05 |
| Flavours | 0.05 | 0.05 |
| Water | to 100 | to 100 |

It was intended that final products with an outer layer of B.1 and a core of B.2 would be made using the fill and suck technique used for Example 1 and Comparative Example A. However, when the calcium chloride solution of B.1 was mixed with the remaining ingredients of the outer layer B.1 the biopolymers began to quickly form a gel. This meant it was not possible to create an outer shell in the the mould and therefore this example could not be made.

In view of the foregoing, it is readily apparent that the invention provides an especially effective process which allows the use of chemically setting gelling systems to be used in peelable frozen confections. It is also apparent that the process of the invention overcomes not only the issues associated with the use of thermosetting gel systems but also overcomes issues that arise when chemically setting gelling systems are used.

## Claims

1. A process for the manufacture of a frozen confection with a peelable coating comprising the steps of:

    a) Providing a mould at a temperature of at most -10°C;
    b) Filling the mould with a liquid mix of a first frozen confection;
    c) Allowing the first frozen confection to partially freeze;
    d) Removing the excess liquid mix from the mould;
    e) Filling the mould with a second liquid mix;
    f) Removing the second liquid mix;
    g) Filling the mould with at least one further frozen confection; and then
    h) Freezing to form a frozen confection product

**characterised in that**

    - The liquid mix of the first frozen confection comprises a chemically setting gelling biopolymer; and
    - The second liquid mix comprises a source of divalent cations.

2. A process according to claim 1 wherein the first frozen confection is a water ice.

3. A process according to claim 1 or claim 2 wherein the first frozen confection comprises from 0.1 wt % to 5 wt% of a chemically setting gelling biopolymer.

4. A process according to any of the preceding claims wherein the chemically setting gelling biopolymer is selected from the group consisting of alginates, iota-carrageenan, kappa-carrageenan and pectin.

5. A process according to any of the preceding claims wherein the chemically setting gelling biopolymer is sodium alginate.

**6.** A process according to claim 5 wherein the first frozen confection comprises from 0.05 wt % to 2 wt% pectin.

**7.** A process according to any of the preceding claims wherein the first frozen confection comprises from 10 wt% to 60 wt% total solids.

**8.** A process according to any of the preceding claims wherein the second liquid mix comprises from 0.25 wt% to 10 wt% of a source of divalent cations.

**9.** A process according to any of the preceding claims wherein the divalent cations are selected from the group consisting of $Ca^{2+}$, $Cu^{2+}$, or $Zn^{2+}$.

**10.** A process according to any of the preceding claims wherein the chemically setting gelling biopolymer is an alginate and the second liquid mix comprises calcium chloride.

**11.** A process according to any of the preceding claims wherein the second liquid mix comprises from 1 wt% to 50 wt% of an acid.

**12.** A process according to any of the preceding claims wherein the period between steps b) and d) from 10 to 360 seconds.

**13.** A process according to any of the preceding claims wherein the period between steps e) and f) is from 5 to 180 seconds.

**14.** A product obtained by the process of any of the preceding claims,


**Patentansprüche**

**1.** Verfahren zur Herstellung eines gefrorenen Konfekts mit einer abziehbaren Beschichtung, umfassend die Schritte von:

a) Bereitstellen einer Form bei einer Temperatur von höchstens -10°C,
b) Füllen der Form mit einer flüssigen Mischung eines ersten gefrorenen Konfekts,
c) Ermöglichen des partiellen Frierens des ersten gefrorenen Konfekts,
d) Entfernen überschüssiger flüssiger Mischung aus der Form,
e) Füllen der Form mit einer zweiten flüssigen Mischung,
f) Entfernen der zweiten flüssigen Mischung,
g) Füllen der Form mit mindestens einem weiteren gefrorenen Konfekt und dann
h) Frieren, um ein gefrorenes Konfektprodukt zu bilden,

**dadurch gekennzeichnet, dass**

- die flüssige Mischung des ersten gefrorenen Konfekts ein chemisch gelierendes Biopolymer umfasst und
- die zweite flüssige Mischung eine Quelle zweiwertiger Kationen umfasst.

**2.** Verfahren nach Anspruch 1, wobei das erste gefrorene Konfekt ein Wassereis darstellt.

**3.** Verfahren nach Anspruch 1 oder 2, wobei das erste gefrorene Konfekt 0,1 Gew.-% bis 5 Gew.-% eines chemisch gelierenden Biopolymers umfasst.

**4.** Verfahren nach irgendeinem der vorhergehenden Ansprüche, wobei das chemisch gelierende Biopolymer aus der aus Alginaten, Jota-Carrageen, Kappa-Carrageen und Pektin bestehenden Gruppe ausgewählt wird.

**5.** Verfahren nach irgendeinem der vorhergehenden Ansprüche, wobei das chemisch gelierende Biopolymer Natriumalginat ist.

**6.** Verfahren nach Anspruch 5, wobei das erste gefrorene Konfekt von 0,05 Gew.-% bis 2 Gew.-% Pektin umfasst.

**7.** Verfahren nach irgendeinem der vorhergehenden Ansprüche, wobei das erste gefrorene Konfekt von 10 Gew.-% bis 60 Gew.-% Gesamtfeststoffe umfasst.

**8.** Verfahren nach irgendeinem der vorhergehenden Ansprüche, wobei die zweite flüssige Mischung von 0,25 Gew.-% bis 10 Gew.-% einer Quelle zweiwertiger Kationen umfasst.

**9.** Verfahren nach irgendeinem der vorhergehenden Ansprüche, wobei die zweiwertigen Kationen aus der aus $Ca^{2+}$, $Cu^{2+}$ oder $Zn^{2+}$ bestehenden Gruppe ausgewählt werden.

**10.** Verfahren nach irgendeinem der vorhergehenden Ansprüche, wobei das chemisch gelierende Biopolymer ein Alginat ist und die zweite flüssige Mischung Calciumchlorid umfasst.

**11.** Verfahren nach irgendeinem der vorhergehenden Ansprüche, wobei die zweite flüssige Mischung von 1 Gew.-% bis 50 Gew.-% einer Säure umfasst.

**12.** Verfahren nach irgendeinem der vorhergehenden Ansprüche, wobei die Zeitspanne zwischen den Schritten b) und d) von 10 bis 360 Sekunden beträgt.

**13.** Verfahren nach irgendeinem der vorhergehenden Ansprüche, wobei die Zeitspanne zwischen den Schritten e) und f) von 5 bis 180 Sekunden beträgt.

**14.** Produkt, erhalten durch das Verfahren nach irgendeinem der vorhergehenden Ansprüche.


**Revendications**

**1.** Procédé de fabrication d'une friandise congelée pourvue d'un enrobage pelable comprenant les étapes suivantes :

a) Utiliser un moule à une température d'au plus -10°C ;
b) Remplir le moule avec un mélange liquide destiné à former la première friandise congelée ;
c) Laisser le premier mélange liquide congeler partiellement ;
d) Retirer le mélange liquide en excédent du moule ;
e) Remplir le moule avec un second mélange liquide ;
f) Retirer le second mélange liquide ;
g) Remplir le moule avec au moins une autre friandise congelée ; puis
h) Congeler pour obtenir un produit de type friandise congelée

**caractérisé en ce que**

- le mélange liquide destiné à former la première friandise congelée comprend un biopolymère de gélification à prise chimique ; et
- le second mélange liquide comprend une source de cations divalents.

**2.** Procédé selon la revendication 1 dans lequel la première friandise congelée est une glace à l'eau.

**3.** Procédé selon la revendication 1 ou la revendication 2 dans lequel la première friandise congelée comprend de 0,1 à 5 % en poids d'un biopolymère de gélification à prise chimique.

**4.** Procédé selon l'une quelconque des revendications précédentes dans lequel le biopolymère de gélification à prise chimique est choisi dans le groupe constitué par les alginates, une carraghénane iota, une carraghénane kappa et la pectine.

**5.** Procédé selon l'une quelconque des revendications précédentes dans lequel le biopolymère de gélification à prise chimique est un alginate de sodium.

**6.** Procédé selon la revendication 5 dans lequel la première friandise congelée comprend de 0,05 à 2 % en poids de pectine.

7. Procédé selon l'une quelconque des revendications précédentes dans lequel la première friandise congelée comprend de 10 à 60 % en poids de solides totaux.

8. Procédé selon l'une quelconque des revendications précédentes dans lequel le second mélange liquide comprend de 0,25 à 10 % en poids d'une source de cations divalents.

9. Procédé selon l'une quelconque des revendications précédentes dans lequel les cations divalents sont choisis dans le groupe constitué par $Ca^{2+}$, $Cu^{2+}$, ou $Zn^{2+}$.

10. Procédé selon l'une quelconque des revendications précédentes dans lequel le biopolymère de gélification à prise chimique est un alginate et le second mélange liquide comprend du chlorure de calcium.

11. Procédé selon l'une quelconque des revendications précédentes dans lequel le second mélange liquide comprend de 1 à 50 % en poids d'acide.

12. Procédé selon l'une quelconque des revendications précédentes dans lequel la période de temps entre les étapes b) et d) est de 10 à 360 secondes.

13. Procédé selon l'une quelconque des revendications précédentes dans lequel la période de temps entre les étapes e) et f) est de 5 à 180 secondes.

14. Produit obtenu par le procédé selon l'une quelconque des revendications précédentes.

Figure 1a

Figure 1b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2012156539 A
- WO 2013007493 A
- CN 202525019

### Non-patent literature cited in the description

- **R.T. MARSHALL ; H.D. GOFF ; R.W. HARTEL.** Ice Cream. Kluwer Academic / Plenum Publishers, 2003
- **C.J. CLARKE.** The Science of Ice Cream. Royal Society of Chemistry, 2004